Europäisches Patentamt

**European Patent Office**

**Office européen des brevets**

(11) Numéro de publication: **0 075 510**
A1

## (12) DEMANDE DE BREVET EUROPEEN

(21) Numéro de dépôt: **82401664.6**

(22) Date de dépôt: **14.09.82**

(51) Int. Cl.³: **B 62 M 3/08**

(30) Priorité: **17.09.81 FR 8117542**
**03.11.81 FR 8120559**

(43) Date de publication de la demande: **30.03.83**
**Bulletin 83/13**

(84) Etats contractants désignés: **BE DE GB IT NL**

(71) Demandeur: **Christol, Lilian, F-34800 Canet (FR)**

(72) Inventeur: **Christol, Lilian, F-34800 Canet (FR)**

(74) Mandataire: **Cuer, André, CABINET CUER 30, rue de Léningrad, F-75008 Paris (FR)**

(54) **Pédale pour cycle.**

(57) L'invention a trait à des perfectionnements d'une pédale pour cycle dans le but d'obtenir un positionnement idéal et constant de la chaussure et d'utiliser au maximum les deux points d'appui de la chaussure sur les branches de la cage de pédale.

Selon l'invention, la branche postérieure (4) de la cage est munie d'un évidement longiforme (10) de configuration rectiligne ou incurvée, où vient de loger l'encoche de la cale-pédale. Les parties adjacentes (11, 12) à cet évidement sont de préférence incurvées. En outre, la branche antérieure (3) de la cage revêt de préférence un profil concave (13) où la semelle de chaussure vient prendre appui sur toute sa largeur.

Application à toutes pédales utilisées par les cyclistes sportifs.

La présente invention a trait au domaine des pédaliers pour cycles et concerne l'apport de perfectionnements aux pédales, tout spécialement aux cages servant d'enveloppe à ces pédales.

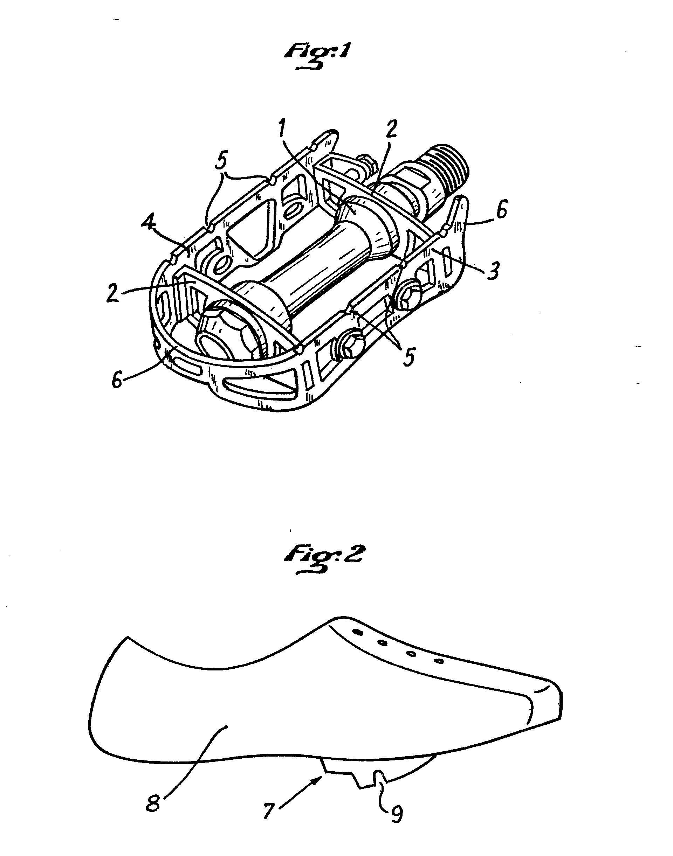

On sait qu'une pédale cycliste -telle que par exemple une pédale de course actuelle illustrée sur la figure 1- comporte essentiellement : un corps 1 renfermant l'axe et les roulements et une cage reliée au corps par des bras 2. La cage se compose d'une branche antérieure 3, sur laquelle peut se fixer par vis un cale-pied et d'une branche postérieure 4, parallèle à 3, les bords supérieurs dedits branches étant généralement crénelés ou munis d'encoches 5 et bordés souvent par des becs 6.

Pour améliorer l'efficacité du pédalage et se rapprocher des conditions idéales d'efforts, les cyclistes sportifs et les coureurs cyclistes utilisent en outre des cale-pédales (voir par exemple figure 2, vue de profil) constitués par une plaque 7 fixée sous la semelle de la chaussure 8 et dont l'encoche 9 vient s'encastrer au-dessus de la branche postérieure 4 de la cage, limitant ainsi en longueur la distance d'engagement du pied sur la pédale.

L'ensemble cale-pieds plus cale-pédales autorise une position fixe du pied sur la pédale dans le sens longitudinal et vertical. Pour tenter d'éviter les déplacements latéraux ou ripages du pied on a prévu sur la cage les séries d'encoches et les becs précités. Mais il est rare que la largeur de la chaussure corresponde à l'espace libre entre les deux becs d'extrémité de cage et le pied peut donc se déplacer latéralement avec tous les inconvénients que cela peut comporter.

Par ailleurs, l'emploi de cale-pédales entraîne une sensible surélévation de la semelle au-dessus de son point d'appui au niveau de l'encoche 9 de la cale 7 ; de ce fait, l'appui sur la branche postérieure 4 de la cage est réduit à la longueur de l'encoche (généralement 40 mm environ) au lieu de s'exercer sur le maximum de la largeur de la semelle (souvent voisine de 75 mm), d'où une perte notable d'efficacité dans la phase de pression du pied sur la cage au moment du pédalage.

Enfin, l'autre point d'appui de la semelle de chaussure sur la branche antérieure 5 de la cage ne correspond qu'à un contact partiel du fait que la forme des semelles est très légèrement concave alors que les bords des branches de cage sont généralement rectilignes.

On voit donc clairement qu'il est impossible d'obtenir avec les pédales connues une position latérale à la fois précise et constante du pied sur la cage de pédale. Par ailleurs, les points d'appui de la semelle de chaussure sur cette cage ne sont que partiels ·. et donc incomplètement utilisés.

L'invention a notamment pour but d'obvier aux inconvénients précités en proposant une cage modifiée apte à permettre un positionnement précis et latéralement fixe de la chaussure sur la pédale et une utilisation maximum des points d'appui de la semelle de chaussure sur les parties antérieure et postérieure de la cage. D'autres avantages encore apparaîtront dans la description qui suit.

Conformément à la caractéristique principale de l'invention, la cage de pédale est prévue de façon qu'au moins un bord longitudinal de sa branche postérieure comporte en sa partie médiane un évidement d'assez grande longueur. En pratique, cet évidement doit avoir au moins 30 mm, par exemple 40 à 45 mm, de longueur de façon que cette dernière soit légèrement supérieure à la largeur de l'encoche utilisée dans les cale-pédales connus.

La configuration de l'évidement, pratiqué sur au moins un bord de la branche postérieure de cage, peut être rectiligne de manière à servir d'appui aux encoches des cales actuelles. Toutefois, il peut s'avérer avantageux de donner à l'évidement un profil légèrement concave de façon à accroître encore la surface d'appui avec la semelle de chaussure.

Conformément à un mode de réalisation particulièrement intéressant, les parties qui bordent l'évidement jusqu'aux extrémités de la branche postérieure de cage sont incurvées et relevées vers les bords de façon à améliorer, dans ce cas encore, l'appui de la semelle généralement de même forme.

La profondeur de la gorge servant d'évidement peut varier entre d'assez larges limites mais elle est le plus souvent maintenue entre 1 et 4 mm, par exemple de l'ordre de 2,5 mm, de façon à être au moins égale à l'espace existant entre le creux de l'encoche du cale-pédale et le dessous de la semelle de chaussure ; ainsi le point d'appui, qui jusqu'alors ne s'exerçait dans les dispositifs connus que sur la longueur de l'encoche de cale sur la branche postérieure de la cage, se trouve totalement utilise pour peu que, comme dit ci-dessus, on ait adopté des bords courbes de chaque côté de l'évidement.

Selon un autre perfectionnement de l'invention, au moins un bord longitudinal de la branche postérieure de cage revêt un profil légèrement concave sur toute sa longueur. On peut ainsi harmoniser les conformations incurvées de la semelle de chaussure et de ladite branche pour contribuer à l'amélioration de position sur la pédale et obtenir un équilibre parfait des deux points d'appui de la chaussure sur la cage.

Conformément à une autre variante de l'invention, la branche postérieure à évidement peut avoir des conformations nettement différentes et tout particulièrement celle d'une pièce en forme de U allongé et aplati dont les deux jambes sont prolongées par des ailes sensiblement parallèles à la base du U, la partie évidée de la branche se trouvant au niveau de la base et des jambes de cette conformation en U plat.

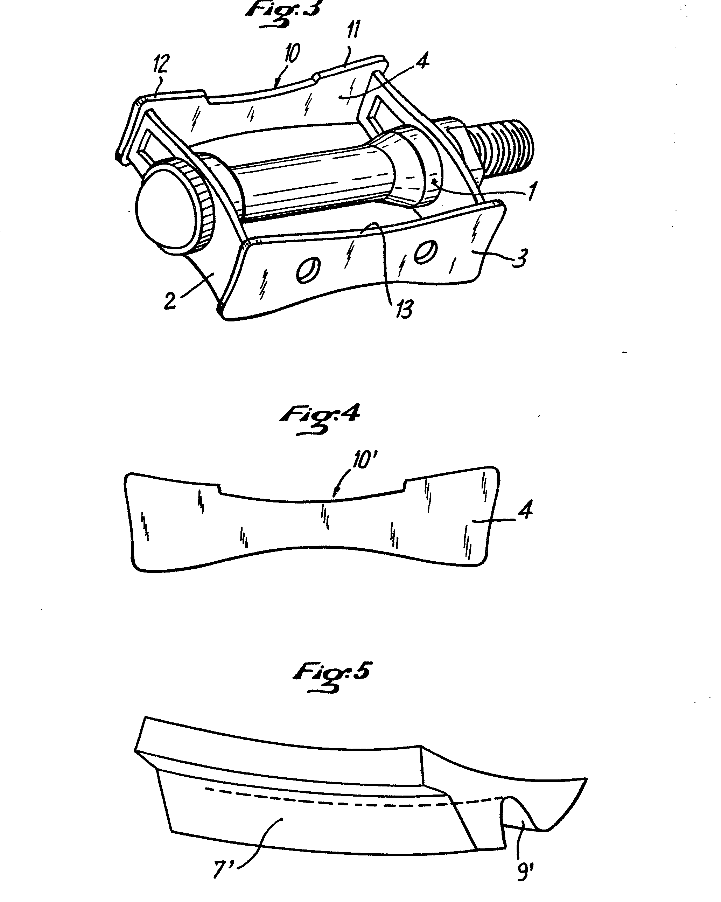

Des modes de réalisation, non limitatifs, des perfectionnements susvisés sont illustrés sur les figures 3 à 6 qui représentent schématiquement :

. Figure 3 : une pédale à cage modifiée selon l'invention ;

. Figures 4 et 5 : une variante de réalisation, adaptée à un type donné de cale-pédale.

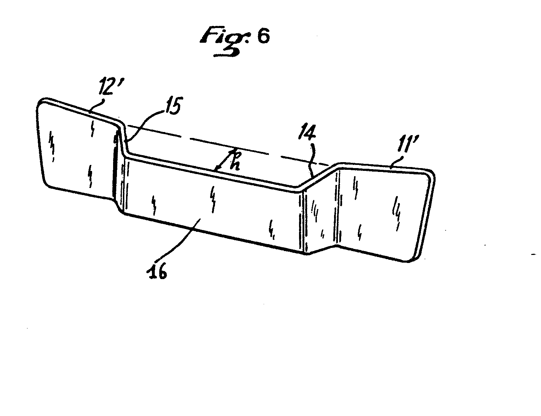

. Figure 6 : une autre variante de forme de la branche postérieure de pédale

On retrouve sur la figure 3, très schématique, la physionomie générale de la pédale connue de la figure 1 mais comportant les importants perfectionnements et les modifications apportées selon l'invention. Tout d'abord, la branche postérieure 4 de la cage n'a plus son arête longitudinale rectiligne et avec cannelures; cette dernière est remplacée par un profil muni d'un évidement 10 dont les bords inclinés ou arrondis qui facilitent la mise en place de la chaussure, se terminent par des parties 11 et 12 de préférence incurvées pour améliorer l'appui de la semelle. En pratique, la longueur de cette gorge 10 est généralement comprise entre 40 et 45 mm et sa profondeur est de préférence calculée entre 1 et 3mm

Alors que, sur la figure 3, l'évidement est de forme sensiblement rectiligne, la variante schématiquement représentée sur la figure 4 illustre une gorge 10' de configuration incurvée. Cette réalisation est particulièrement intéressante dans le cas où l'on prévoit, comme cale-pédale, une plaque 7' à encoche 9' dont la forme est également incurvée, comme on peut le voir sur la figure 5 ; de cette façon, la chaussure a un positionnement idéal sur la branche postérieure 4 et elle utilise pleinement son appui sur cette branche.

Selon un autre perfectionnement de l'invention, la branche antérieure 3 de la cage de pédale est conçue avec au moins un bord longitudinal incurvé 13 (fig.3), la profondeur de la concavité étant d'environ 2 à 3mm. De cette façon, l'autre point d'appui de la semelle généralement de forme convexe- trouve une surface de contact parfaitement adaptée et la chaussure est parfaitement équilibrée, en position et en stabilité, sur les deux branches de la cage de pédale.

Selon le mode de réalisation de la variante illustrée sur la figure 6, la branche postérieure, au lieu d'être longiligne, a l'allure générale d'une sorte de gâche de serrure avec des bords rentrants 14 et 15, qui peuvent être perpendiculaires ou non aux ailes de retour 11' et 12' et à la partie en saillie 16. L'évidement se retrouve sur le bord de la partie 16 et sur les deux bords 14 et 15 ; il est représenté par la hauteur h. De préférence, les ailes 11' et 12' sont légèrement inclinées vers le haut. La déclivité de l'évidement, ou hauteur h, correspond sensiblement à la distance qui sépare la base de la fente d'un cale-pédale et le dessous de la semelle de chaussure ; elle peut être par exemple de l'ordre de 3mm.

En pratique, le positionnement sur la pédale de ladite branche en U selon l'invention peut être effectué de diverses manières, par exemple avec la base du U tournée vers l'intérieur (du côté de l'axe de pédale) ou au contraire vers l'extérieur et à des distances de l'axe qui peuvent être variables ; ainsi l'appui du pied au niveau de l'évidement peut s'exercer plus ou moins près de l'axe de la pédale, vers l'avant ou l'arrière.

Comme dans le cas des réalisations susvisées, la cale pédale s'accroche directement sans déviation latérale sur l'arête de la branche évidée et la semelle de la chaussure repose sur les parties extrêmes (ou ailes 11', 12') de cette branche.

Toutefois, si on le désire, on peut autoriser un léger pivotement de la chaussure sur la cage, par exemple en élargissant la fente du cale-pédale à ses extrémités. On peut aussi obtenir un jeu latéral en prévoyant une longueur d'évidement supérieure, par exemple de 2 à 4mm, à la longueur de fente du cale-pédale, ceci sans compromettre l'efficacité du système. Le pivotement, parfois souhaité par des utilisateurs, est atteint lorsque les jambes 14 et 15 ne sont pas perpendiculaires à la base du U, comme cela est illustré sur la figure 1.

Grâce aux améliorations décrites ci-dessus, le pied du cycliste acquiert une position idéale sur la pédale et la sécurité se trouve accrue du fait de l'impossibilité d'un dégagement inopportun de la chaussure au cours de l'effort. Bien entendu, le cycliste peut retirer sa chaussure de l'emprise du cale-pied et de la cale-pédale avec la même facilité que dans une pédale classique en desserrant la courroie du cale-pied et en soulevant l'arrière de la chaussure.

D'autres avantages encore sont apportés par l'invention. On notera en particulier que l'appui du pied sur la pédale s'exerce plus près de l'axe de cette dernière. En outre, le rebord latéral et les becs (6) généralement prévus sur une pédale classique (fig.1) peuvent être avantageusement supprimés, ce qui contribue à améliorer l'esthétique et l'aérodynamisme de la pédale. Par ailleurs, le serrage du cale-pied peut être/modéré, ce qui permet d'améliorer le confort du cycliste. Enfin, une seule pédale conforme à l'invention, réalisée avec des dimensions standard, convient à toutes les longueurs et largeurs de pieds.

On notera que le nouveau type de cage selon l'invention convient à tous les types de chaussures cyclistes, à semelles sensiblement plates ou à celles des différentes courbures. Par ailleurs, l'invention s'applique avec la même efficacité non seulement aux cales-pédales positionnés à l'origine par le fabricant de chaussure mais aussi à tous les cales-pédales que l'utilisateur peut fixer avec un biais plus ou moins accentué selon ses convenances personnelles. A cet égard, il est avantageux d'utiliser, dans le cadre de l'invention, un cale-pédale dont la fente est verticale et non oblique du fait que les deux points d'appui de la chaussure sont à l'horizontale lorsque la pédale se trouve elle-même à l'horizontale.

Bien entendu, l'invention n'est pas limitée au cas d'application à la pédale de type classique, rappelé ci-dessus, mais elle s'étend aux modèles à cale-pied incorporé dans lesquels le corps central se prolonge vers l'avant pour servir d'appui antérieur et de support au cale-pied, seule subsistant alors la partie postérieure de la cage, laquelle est munie de l'évidement et/ou des autres perfectionnements susvisés. L'invention s'applique aussi au cas des pédales de piste à cage réduite ou encore aux pédales sans axe, où la rotation de la pédale est obtenue par enclenchement direct dans la manivelle.

- R E V E N D I C A T I O N S -

1. Pédale de cycle du type comportant un corps central (!) avec axe et roulement, relié par bras (2) à une cage dont la partie ou branche antérieure (3) est apte à recevoir un cale-pied et la partie ou branche postérieure (4) parallèle à la précédente, sert à l'enclenchement de l'encoche (9) de la cale-pédale (7), ladite pédale étant CARACTERISEE en ce que au moins un bord longitudinal de la branche postérieure (4) comporte en son milieu un évidement (10) destiné à recevoir ladite encoche.

2. Pédale selon la revendication 1, caractérisée en ce que l'évidement (10) a une forme rectiligne.

3. Pédale selon la revendication 1, caractérisée en ce que l'évidement (10) a une forme générale concave.

4. Pédale selon l'une quelconque des revendications 1 à 3, caractérisée en ce que les parties (11, 12) qui jouxtent de chaque côté l'évidement jusqu'aux extrémités de ladite branche postérieure ont une conformation incurvée, relevée vers lesdites extrémités ; les bords eux-mêmes de l'évidement étant arrondis.

5. Pédale selon l'une quelconque des revendications 1 à 4, caractérisée en ce que au moins un bord longitudinal (13) de la branche antérieure (3) a un profil concave.

6. Pédale selon l'une quelconque des revendications 1 à 5, caractérisée en ce que la branche postérieure (4) est constituée par une pièce en forme de U allongé et aplati dont les deux jambes (14,15) sont prolongées par des ailes (11', 12') sensiblement parallèles à la base de U, lesdites base et jambe étant situées à un niveau inférieur (h) à la ligne fictive rejoignant lesdites ailes pour constituer l'évidement (10) destiné à recevoir l'encoche (9) de la cale-pédale.

7. Pédale selon la revendication 6, caractérisée en ce que les jambes (14,15) sont ou non perpendiculaires aux ailes (11', 12') et à la partie (16) en saillie de ladite branche et en ce que ces ailes sont légèrement inclinées vers le haut.

8. Pédale selon l'une quelconque des revendications 1 à 7, caractérisée en ce que l'évidement (10) a une longueur d'au moins 30mm, légèrement supérieure à la longueur d'encoche (9) de la cale-pédale (7) et une profondeur au moins égale à l'espace existant entre le creux de l'encoche et le dessous de la semelle de chaussure, de manière à assurer le blocage latéral de la chaussure sur la pédale et à permettre un appui de la semelle au-dessus de l'évidement ainsi que sur les parties de la cage de pédale qui jouxtent de chaque côté l'évidement.

1/3

**Fig:1**

**Fig:2**

*Fig. 3*

12   10   11   4

1

2   13   3

*Fig. 4*

10'

4

*Fig. 5*

7'   9'

3/3

Fig. 6

12'

15

14

11'

h

16

# 0075510

Office européen
des brevets

**RAPPORT DE RECHERCHE EUROPEENNE**

Numéro de la demande

EP 82 40 1664

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 62 M    3/08 |
| A | FR-A- 908 981 (TRUBERT)<br>* en entier * | 1,2 | |
| | --- | | |
| A | FR-A-2 446 760 (T.I. RALEIGH)<br>* en entier * | 1,2,4 | |
| | --- | | |
| A | FR-A- 972 641 (MASSAL)<br>* figure 1; page 1, lignes 25,26;<br>colonne de gauche * | 1,2 | |
| | --- | | |
| A | DE-C- 88 032 (MYERS)<br><br>* en entier * | | |
| | ----- | | |

**DOMAINES TECHNIQUES RECHERCHES (Int. Cl. ³)**

B 62 M

Le présent rapport de recherche a été établi pour toutes les revendications

| Lieu de la recherche<br>LA HAYE | Date d'achèvement de la recherche<br>22-12-1982 | Examinateur<br>GEMMELL R.I.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82